# EUROPEAN PATENT SPECIFICATION

(11) **EP 0 452 144 B1**
(45) Date of publication and mention of the grant of the patent: **13.12.1995**
(21) Application number: 91303247.0
(22) Date of filing: 12.04.1991
(51) Int. Cl.: C02F 3/20

(54) **Fine bubble diffuser system**
Feinblasiges Diffusorsystem
Système d'aération par diffusion à bulles fines

(30) Priority: 12.04.1990 GB 9008344
(43) Date of publication of application: 16.10.1991
(73) Proprietor: WYATT LIMITED, Oswestry, Shropshire SY11 1ZZ (GB)
(72) Inventor: Jones, Brian Lawrence, Wellington TF1 3LP (GB); Ilett, Keith Jonathan, Oswestry, Shropshire SY11 2AE (GB)

(56) References cited:
- DE-A- 2 450 837
- DE-A- 2 453 670
- GB-A- 2 086 745

## Description

The present invention relates to a fine bubble diffuser system for use in the dispersion of gases in a liquid.

In particular the present invention relates to a fine bubble diffuser system of the type comprising a number of fine bubble porous diffusers mounted at spaced apart locations along a generally horizontal pipe or network of pipes. Such a diffuser system can be for use in the aeration of waste water. The diffusers have a porous component made of a ceramic or a suitable plastics material and the system is, in use, located adjacent to the base of an aeration or other tank. Gas, for example air, is passed under pressure along the pipe or pipes, the air passing through the diffusers into the waste water in the collection tank to thus oxygenate this waste water.

In a known diffuser system the pipe or pipes are of plastics material and cylindrical in cross-section and the porous diffusers are generally dome-shaped. To secure the generally dome-shaped porous diffusers to the cylindrical pipes a base plate and saddle arrangement is secured to the pipe so that, in use, the base plate is generally horizontal and on the upper side of the pipe. The base plate has a disc-like configuration with a centrally located threaded bore which sealingly communicates with the inside of the pipe. The generally dome-shaped porous diffuser is secured to the base plate with a gasket therebetween, by a special hollow and purpose made bolt which sealingly passes through the centre of the diffuser and engages in the complementarily threaded bore in the base plate. The hollow bolt has an axially extending blind bore which connects with restrictor ports in the bolt wall, thus restricting air flow from the pipe into the cavity defined by the porous diffuser and base plate. A system of this type is known from GB-A-2 086 745. Clearly this diffuser system is relatively expensive due to the need to construct and attach to the pipes, the base plate and saddle arrangements, besides having to manufacture the hollow bolts. Further, there is a dimensional problem, as a certain throughflow is required through the pipes with negligible pressure drop, and this generally dictates the necessary cross-sectional area and thus diameter of pipe to be used. Having selected the pipe diameter, this dictates the distance the porous diffuser must necessarily be above the base of the aeration or other tank. However, the diffuser needs to be as near to the base of the tank as possible to avoid waste water regions where the diffused air does not reach and reduce the possibility of solids settlement.

Clearly this presents a design conflict.

The aim of the present invention is to provide a fine bubble diffuser system of robust design, which is relatively cheap to manufacture and which optimises the positioning of the diffuser in the aeration or other tank.

According to the present invention there is provided a fine bubble diffuser system, comprising a hollow pipe having at least a part of its wall flattened to provide a planar wall section, a generally dome-shaped porous diffuser secured to the outside surface of said planar wall section to define a cavity between the diffuser and the pipe, and a restrictor orifice provided in said part of the pipe wall to permit gas flow from the pipe into said cavity.

Generally, the system comprises a plurality of such porous diffusers each secured to a flattened part of the pipe wall at spaced-apart locations along the length of the pipe, there being a respective restrictor orifice for each porous diffuser.

In a preferred embodiment of the present invention the pipe has a rectangular transverse cross-section, a planar wall of the pipe providing the planar wall section. Alternatively, the pipe may have a triangular transverse cross-section or a generally cylindrical transverse cross-section with part of the circumference of the pipe being flattened to provide a flattened wall section extending continuously along the length of the pipe, or, alternatively, being flattened at the spaced-apart locations.

The restrictor orifice preferably incorporates a one-way valve which permits air-flow from the pipe into the cavity between the porous diffuser and the pipe, but prevents a return flow should the pressurised air feed cease. In such a case the liquid under treatment, for example waste water, will enter the cavity but be unable to gain access to the pipe. The one-way valve may comprise a resilient flap extending over the restrictor orifice. Preferably the pipe is made of stainless steel.

Clearly, the present invention obviates the need for a base plate and saddle arrangement and merely requires a standard bolt. Thus manufacture is simplified and the cost of manufacture is minimised.

Further, by utilising the rectangular transverse cross-section pipe of the preferred embodiment, the pipe dimensions can be selected so that the porous diffuser can be mounted as close as possible to the base of an aeration or other tank whilst still maintaining the required throughflow cross-section for the pipe. In this way, the performance of the diffuser system is improved. Further, as the number of component parts is reduced as compared to the known diffuser system, there is less chance of leakage occurring. In particular, there is no need for chemical solvents that are used in solvent welding the saddle to the plastic pipe in the known diffuser systems. Thus another potential source of leakage is eliminated.

The flattened wall section of the pipe can accommodate all sizes of diffuser domes up to the width of the section. This provides design flexibility and also enables fitted diffusers to be readily replaced by ones of different diameter should the aeration performance requirements change.

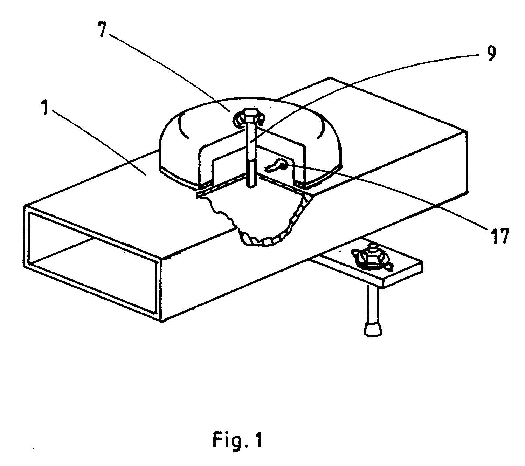

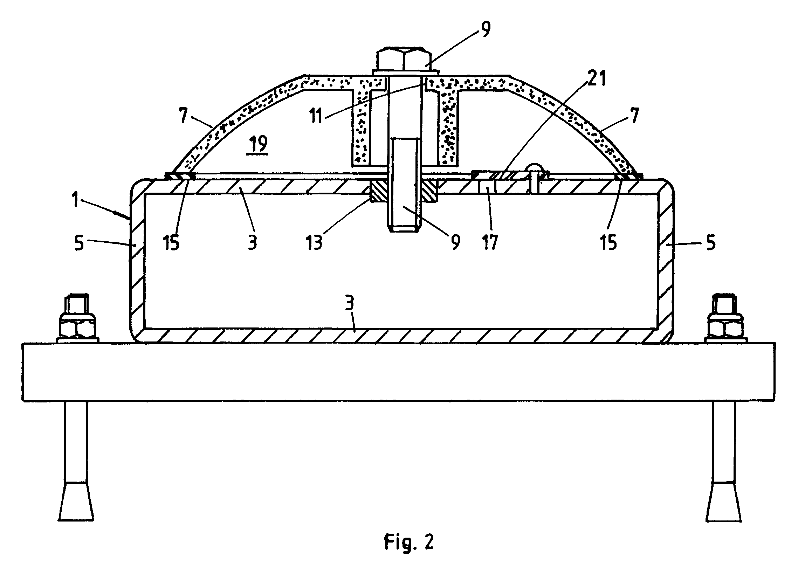

The preferred use of stainless steel for the rectangular pipe reduces the problems associated with thermal expansion, which can be particularly troublesome when plastic materials are used. Stainless steel pipes also have a much longer life. A preferred embodiment of the present invention will now be described, by way of example, with reference to the accompanying drawings, in which: Figure 1 is a perspective, partially cut-away view of part of a diffuser system constructed according to the present invention; and Figure 2 is a transverse cross-sectional view of part of the diffuser system illustrated in Figure 1.

The preferred embodiment of the present invention illustrated in the accompanying drawings comprises a hollow pipe 1 having a rectangular transverse cross section, comprising two parallel longer walls 3 and two parallel shorter walls 5. A generally dome-shaped porous diffuser 7 is secured to the upper longer wall 3 of the pipe 1 by a standard bolt 9 which passes through a centrally located hole 11 in the diffuser 7 and which threadedly engages in a complementarily threaded boss 13 fixed in the said upper longer wall 3. A seal (not shown) seals the bolt 9 in the hole 11 and a gasket 15 located between the edge of the diffuser 7 and the said upper longer wall 3 of the pipe 1. A restrictor orifice 17 is provided in the said upper longer wall 3, allowing communication between the pipe 1 and the cavity 19 defined by the diffuser 7 and the said upper longer wall 3.

Flow through the restrictor orifice 17 is controlled by a one-way valve formed by a resilient flap 21, which is secured to the outer surface of the said upper longer wall 3 and which extends over the restrictor orifice 17. Thus, air can flow under pressure from the pipe 1 through the restrictor orifice 17 deflecting the flap 21 and into the cavity 19, the air then passing through the diffuser 7.

However, return flow is prevented by the flap 21 in the event that air pressure in the pipe 1 drops or ceases. In such an event the liquid under treatment, for example waste water, will enter the cavity 19 but be unable to gain access to the pipe 1 as the flap 21 closes the orifice 17.

As an alternative to the flap 21 a ball valve may be fitted at the orifice 17.

This diffuser assembly construction is clearly simple with it being possible to bolt known dome-shaped diffusers 7, using standard bolts, directly to the wall of a pipe 1 without the need for any further components or structural design changes which are required in the prior art diffuser systems. Due to the reduction in the number of component parts as compared to a known diffuser system there is less chance of leakage occurring.

As an alternative to a rectangular cross-section pipe, a triangular cross-section pipe or cylindrical pipe with a flattened wall section at specific locations along its length or as a continuous section along the length of the pipe, can be used. However, the rectangular cross-section pipe has the advantage that it can be dimensioned in transverse cross-section so that it positions the diffuser 7 as close to the base of an aeration or other tank as is possible whilst maintaining the desired flowthrough cross-section for the pipe 1. This reduces the 'dead space' between the diffusers and the tank floor.

The present invention thus provides a fine bubble diffuser system for use in the treatment of waste water, which is simple, robust and relatively cheap to manufacture and install, besides being able to offer a significant performance improvement over known diffuser systems.

## Claims

1. A fine bubble diffuser system, comprising a hollow pipe (1) having at least a part of its wall flattened to provide a planar wall section (3), a generally dome-shaped porous diffuser (7) secured to the outside surface of said planar wall section to define a cavity (19) between the diffuser and the pipe, and a restrictor orifice (17) provided in said part (3) of the pipe wall to permit gas flow from the pipe into said cavity.

2. A diffuser system according to Claim 1, comprising a plurality of said porous diffusers (7) each secured to a said flattened part (3) of the pipe wall at spaced-apart locations along the length of the pipe, there being a respective said restrictor orifice (17) for each porous diffuser (7).

3. A diffuser system according to Claim 1 or Claim 2, wherein said pipe (1) has a rectangular transverse cross-section, a planar wall (3) of the pipe providing said planar wall section.

4. A diffuser system according to Claim 1 or Claim 2, wherein said pipe has a triangular transverse cross-section, a planar wall of the pipe providing said planar wall section.

5. A diffuser system according to Claim 1 or Claim 2, wherein said pipe has a generally cylindrical transverse cross-section with part of the circumference of the pipe being flattened to provide a said planar wall section extending continuously along the length of the pipe.

6. A diffuser system according to Claim 2, wherein said pipe has a generally cylindrical transverse cross-section with part of the circumference of the pipe being flattened at said spaced apart locations to provide a respective said planar wall section for each porous diffuser.

7. A diffuser system according to any one of the preceding claims, wherein said restrictor orifice (17) incorporates a one-way valve which permits gas flow from the pipe (1) into said cavity (19).

8. A diffuser according to Claim 7, wherein said one-way valve comprises a resilient flap (21) extending over said restrictor orifice (17).

9. A diffuser system according to any one of the preceding claims, wherein said porous diffuser (7) is secured to said pipe (1) by a standard bolt (9).

10. A fine bubble diffuser system according to any one of the preceding claims, wherein said pipe (1) comprises stainless steel.

## Patentansprüche

1. Feinblasiges Diffusorsystem, mit einem Hohlrohr (1), dessen Wandung zur Bildung eines ebenen Wandteils (3) zumindest teilweise abgeflacht ist, mit einem im wesentlichen kalottenförmigen, porösen Diffusor (7), welcher an der Aussenfläche dieses ebenen Wandteils befestigt ist, sodass zwischen Diffusor und Rohr ein Hohlraum (19) abgegrenzt wird, sowie mit einem in diesem Teil (3) der Rohrwandung vorgesehenen Drosselöffnung (17) für den Gasdurchfluss aus dem Rohr in den Hohlraum.

2. Diffusorsystem nach Anspruch 1, gekennzeichnet durch mehrere der genannten porösen Diffusor (7), jeweils über die Länge des Rohres beabstandet und an einer genannten Abflachung (3) der Rohrwandung befestigt, wobei für jeden porösen Diffusor (7) jeweils eine Drosselöffnung (17) vorhanden ist.

3. Diffusorsystem nach Anspruch 1 oder 2, dadurch gekennzeichnet, dass das Rohr (1) einen rechteckigen Querschnitt aufweist, wobei das ebene Wandteil durch eine ebene Rohrwandung (3) gebildet ist.

4. Diffusorsystem nach Anspruch 1 oder 2, dadurch gekennzeichnet, dass das Rohr (1) einen dreieckigen Querschnitt aufweist, wobei das ebene Wandteil durch eine ebene Rohrwandung gebildet ist.

5. Diffusorsystem nach Anspruch 1 oder 2, dadurch gekennzeichnet, dass das Rohr einen im wesentlichen zylindrischen Querschnitt aufweist, wobei ein Teil des Rohrumfangs zur Bildung eines genannten über die Länge des Rohres kontinuierlich verlaufenden Wandteils abgeflacht ist.

6. Diffusorsystem nach Anspruch 2, dadurch gekennzeichnet, dass das Rohr einen im wesentlichen zylindrischen Querschnitt aufweist, wobei ein Teil des Rohrumfangs zur Bildung eines jeweiligen genannten ebenen Wandteils für jeden porösen Diffusor an den genannten beabstandeten Stellen abgeflacht ist.

7. Diffusorsystem nach einem der vorangehenden Ansprüche, dadurch gekennzeichnet, dass die Drosselöffnung (17) ein Einwegventil aufweist, welches den Gasdurchfluss aus dem Rohr (1) in den Hohlraum (19) zulässt.

8. Diffusorsystem nach Anspruch 7, dadurch gekennzeichnet, dass das Einwegventil eine federnde, die Drosselöffnung (17) übergreifende Klappe (21) umfasst.

9. Diffusorsystem nach einem der vorangehenden Ansprüche, dadurch gekennzeichnet, dass der poröse Diffusor (7) mit einem üblichen Bolzen (9) am Rohr (1) befestigt ist.

10. Feinblasiges Diffusorsystem nach einem der vorangehenden Ansprüche, dadurch gekennzeichnet, dass das Rohr (1) aus Edelstahl besteht.

## Revendications

1. Système d'aération par diffusion à bulles fines, comportant un tuyau creux (1) dont au moins une partie de la paroi est aplatie pour fournir une section de paroi plane (3), un diffuseur poreux (7) en forme générale de calotte, accroché à la surface extérieure de ladite section plane de la paroi pour définir une cavité (19) entre le diffuseur et le tuyau, et un orifice d'étranglement (17) établi dans ladite partie (3) de la paroi du tuyau afin de permettre l'écoulement du gaz du tuyau vers l'intérieur de ladite cavité.

2. Système de diffusion selon la revendication 1, se caractérisant par une pluralité desdits diffuseurs poreux (7), chacun accroché à ladite partie aplatie (3) de la paroi du tuyau, à des intervalles sur la longueur du tuyau, et avec un tel orifice d'étranglement (17) pour chaque diffuseur poreux (7).

3. Système de diffusion selon la revendication 1 ou 2, caractérisé en ce que ledit tuyau (1) comporte une section transversale rectangulaire, et une paroi plane (3) du tuyau constitue ladite section plane de la paroi.

4. Système de diffusion selon la revendication 1 ou 2, caractérisé en ce que ledit tuyau comporte une section transversale triangulaire, et une paroi plane du tuyau constitue ladite section plane de la paroi.

5. Système de diffusion selon la revendication 1 ou 2, caractérisé en ce que ledit tuyau comporte une section transversale généralement cylindrique, une partie de la circonférence du tuyau étant aplatie pour fournir une dite section plane de la paroi s'étendant en continu le long du tuyau.

6. Système de diffusion selon la revendication 2, caractérisé en ce que ledit tuyau comporte une section transversale généralement cylindrique, une partie de la circonférence du tuyau étant aplatie aux dites intervalles pour constituer une section plane de la paroi respectivement pour chaque diffuseur poreux.

7. Système de diffusion selon l'une quelconque des revendications précédentes, caractérisé en ce que ledit orifice d'étranglement (17) comprend une vanne unidirectionnelle permettant l'écoulement du gaz du tuyau (1) vers l'intérieur de ladite cavité (19).

8. Système de diffusion selon la revendication 7, caractérisé en ce que ladite vanne unidirectionnelle comporte un clapet élastique (21) qui s'étend sur ledit orifice d'étranglement (17).

9. Système de diffusion selon l'une quelconque des revendications précédentes, caractérisé en ce que ledit diffuseur poreux (7) est accroché audit tuyau (1) par l'intermédiaire d'un boulon standard (9).

10. Système d'aération par diffusion à bulles fines selon l'une quelconque des revendications précédentes, caractérisé en ce que ledit tuyau (1) est en acier inoxydable.
